(19) Europäisches Patentamt / European Patent Office / Office européen des brevets

(11) **EP 2 274 658 B1**

(12) **EUROPEAN PATENT SPECIFICATION**

(45) Date of publication and mention
of the grant of the patent:
**20.06.2012 Bulletin 2012/25**

(21) Application number: **08737907.9**

(22) Date of filing: **18.04.2008**

(51) Int Cl.:
**G05D 1/10** $^{(2006.01)}$

(86) International application number:
**PCT/IB2008/051497**

(87) International publication number:
**WO 2009/127907 (22.10.2009 Gazette 2009/43)**

(54) **VISUAL AUTOPILOT FOR NEAR-OBSTACLE FLIGHT**

VISUELLER AUTOPILOT FÜR FLUG IN DER NÄHE VON HINDERNISSEN

PILOTE AUTOMATIQUE VISUEL POUR VOL PRÈS D'OBSTACLES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**19.01.2011 Bulletin 2011/03**

(73) Proprietor: **ECOLE POLYTECHNIQUE FEDERALE DE LAUSANNE (EPFL)**
**1015 Lausanne (CH)**

(72) Inventors:
• **ZUFFEREY, Jean-Christophe**
**CH-1024 Ecublens (CH)**
• **BEYELER, Antoine**
**CH-1022 Chavannes (CH)**
• **FLOREANO, Dario**
**CH-1031 Mex (CH)**

(74) Representative: **Leman Consulting S.A.**
**Chemin de Précossy 31**
**1260 Nyon (CH)**

(56) References cited:
**US-A1- 2007 093 945**

• **GREEN W E ET AL: "Optic-Flow-Based Collision Avoidance" IEEE ROBOTICS & AUTOMATION MAGAZINE, IEEE SERVICE CENTER, PISCATAWAY, NJ, US, vol. 14, no. 1, 1 March 2008 (2008-03-01), pages 96-103, XP011206601 ISSN: 1070-9932**
• **RUFFIER F ET AL: "Optic flow regulation: the key to aircraft automatic guidance" ROBOTICS AND AUTONOMOUS SYSTEMS, ELSEVIER SCIENCE PUBLISHERS, AMSTERDAM, NL, vol. 50, no. 4, 31 March 2005 (2005-03-31), pages 177-194, XP025305420 ISSN: 0921-8890 [retrieved on 2005-03-31] cited in the application**
• **SERRES J ET AL: "A vision-based autopilot for a miniature air vehicle: joint speed control and lateral obstacle avoidance" AUTONOMOUS ROBOTS, KLUWER ACADEMIC PUBLISHERS, BO, vol. 25, no. 1-2, 22 December 2007 (2007-12-22), pages 103-122, XP019599653 ISSN: 1573-7527**

**Description**

**Introduction**

This present invention describes a novel vision-based control strategy for autonomous cruise flight in possibly cluttered environments such as - but not limited to - cities, forests, valleys, or mountains.

**Prior art**

So far, the vast majority of autopilots for autonomous aircrafts rely on a complete estimation of their 6 degree-of-freedom state, including their spatial and angular position, using a sensor suite that comprises a GPS and an inertial measurement unit (IMU). While such an approach exhibits very good performance for flight control at high altitude, it does not allow for obstacle detection and avoidance, and fails in cases where GPS signals are not available. While such systems can be used for a wide range of missions high in the sky, some tasks require near-obstacle flight, for example surveillance or imaging in urban environments or environment monitoring in natural landscapes. Flying at low altitude in such environments requires the ability to continuously monitor obstacles and quickly react to avoid them. In order to achieve this, we take inspiration from insects and birds, which do not use GPS, but rely mostly on vision and, in particular, optic flow (Egelhaaf and Kern, 2002, Davies and Green, 1994). This paper proposes a novel and simple way of mapping optic flow signals to control aircraft without state estimation in possibly cluttered environments. The proposed method can be implemented in a lightweight and low-consumption package that is suitable for a large range of aircraft, from toy models to mission-capable vehicles.

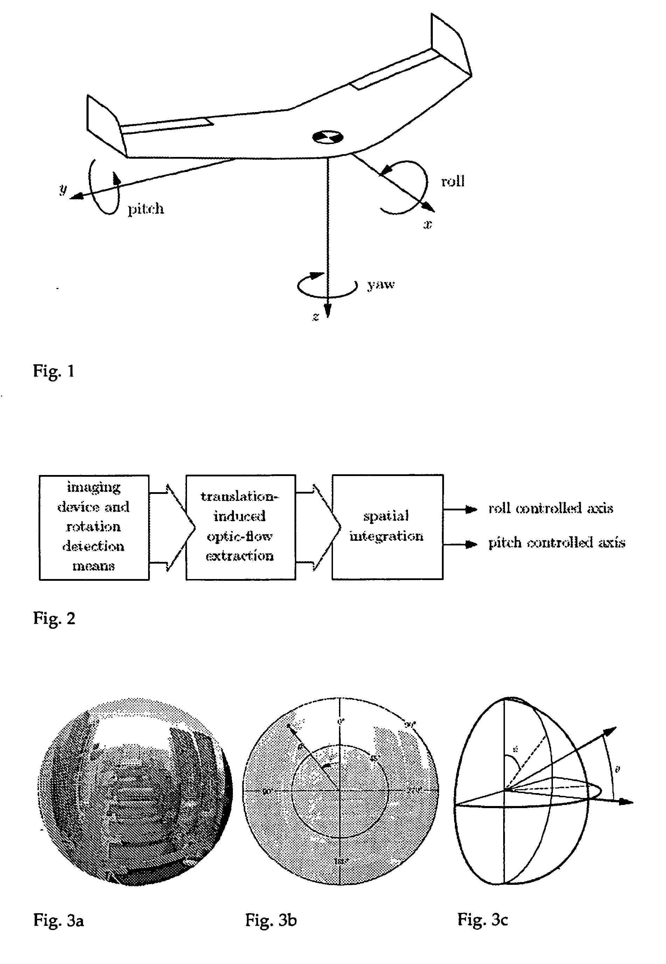

On a moving system, optic flow can serve as a mean to estimate proximity of surrounding obstacles (Gibson, 1950, Whiteside and Samuel, 1970, Koenderink and van Doorn, 1987) and thus be used to avoid them. However, proximity estimation using optic flow is possible only if the egomotion of the observer is known. For an aircraft, egomotion can be divided in rotational and translational components. Rotation rates about the 3 axes (figure 1) can easily be measured using inexpensive and lightweight rotation detection means (for example rate gyro or, potentially, using the optic-flow field itself). The components of the translation vector are instead much more difficult to measure on a free-flying platform. However, in most cases translation can be derived from the dynamics of the aircraft. Fixed-wing aircrafts typically have negligible lateral or vertical displacements, flying essentially along their longitudinal axis ($x$ axis in figure 1). Rotorcraft behaviour is similar to fixed-wing platforms when they fly at cruise speed (as opposed to near-hover mode where translation patterns can be more complex). We therefore restrict our control strategy to the cases where the translation vector can be assumed to be aligned with the longitudinal axis of the aircraft. For the sake of simplicity, we use the term *cruising* to identify this flight regime. Note that in cruising the amplitude of the translation vector can easily be measured by means of an onboard velocity sensor (for example, a pitot tube, an anemometer, etc.). The observation that the translation vector has a fixed direction with respect to the aircraft allows to directly interpret optic flow measurements as proximity estimations, which can then be used for obstacle avoidance. While, in practice, there are small variations in the translation direction, they are sufficiently limited to be ignored.

Another common trait of most cruising aircraft is the way they steer. Most of them have one or more lift-producing wings (fixed, rotating or flapping) about which they can roll and pitch (see figure 1 for the axis name conventions). In standard cruise flight, steering is achieved by a combination of rolling in the direction of the desired turn and then pitching up. It is therefore generally sufficient to generate only two control signals to steer the aircraft corresponding to the roll and pitch controlled axes.

Recently, attempts have been made to add obstacle avoidance capabilities to unmanned aerial vehicles. For example, Scherer, Singh, Chamberlain, and Saripalli (2007) embedded a 3-kg laser range finder on a 95-kg autonomous helicopter. However, active sensors like laser, ultrasonic range finders or radars tend to be heavy and power consuming, and thus preclude the development of lightweight platforms that are agile and safe enough to operate at low altitude in cluttered environments.

Optic flow, on the contrary, requires only a passive vision sensor in order to be extracted, and contains information about the distance to the surroundings that can be used to detect and avoid obstacles. For example, Muratet, Doncieux, Brière, and Meyer (2005), Barber, Griffiths, McLain, and Beard (2005) and Griffiths, Saunders, Curtis, McLain, and Beard (2007) used optic flow sensors to perceive proximity of obstacles. However both systems still required GPS and IMU for altitude and attitude control. Other studies included optic flow in the control of flying platforms (Barrows et al., 2001, Green et al., 2003, Chahl et al., 2004), but the aircraft were only partially autonomous, regulating exclusively altitude or steering and thus still requiring partial manual control. Optic flow has received some attention for indoor systems for which GPS is unavailable and weight constraints are even stronger (Ruffier and Franceschini, 2005, Zufferey et al., 2007), but complete autonomy has yet to be demonstrated. Finally, Neumann and Bülthoff (2002) proposed a complete autopilot based on visual cues, but the system still relied on a separate attitude stabilisation mechanism that would require an additional mean to measure verticality (for example, an IMU).

In document Green W. et al "Optic-Flow-Based Collision Avoidance", IEEE Robotics & Automation magazine, IEEE Service center, Piscataway, NJ, US vol. 14, N° 1, March 2008, the optic flow is used to sense when an obstacle is within two turning radii of the aircraft, which avoids the collision by fully deflecting the rudder. The optic flow is passed to a threshold detector and acts on the rudder in case that the value exceeds the threshold. One viewing direction is used to act on the rudder on one side and the other viewing direction is used to act on the rudder on the other side. The optic flows from several viewing directions are therefore not combined to control the yaw axis. This control strategy would fail as soon as more than one obstacle are occurring around the flight trajectory. In addition, a drawback of this simplistic control strategy is that it does not allow controlling several axes such as the attitude and the altitude of the aircraft.

**Brief description of the invention**

In contrast to these results, the approach of the present invention is to provide an autopilot that relies exclusively on visual and gyroscopic information, with no requirement for explicit state estimation nor additional stabilisation mechanisms.

This approach is based on a method and a device for avoiding collision with obstacles by an aircraft having a longitudinal axis defined by its flying direction as described by claim 1, respectively by claim 9.

**Brief description of the figures**

The present invention will be better understood thank to the attached figures in which :

- Figure 1: Aerodynamical coordinate system of the aircraft reference frame. For convenience, the name of the three rotation directions is also indicated.
- Figure 2: Overview of the steps required to map the data provided by an imaging device and rate detection means into control signals
- Figures 3a-c: A large field-of-view is desirable to detect potentially dangerous obstacles on the aircraft trajectory.
- Figure 3a: An example image in the frontal field of view taken with a fisheye lens.
- Figure 3b: The image plane coordinate system used throughout this text. $\Psi$ is the azimuth angle ($\psi \in [0;2\pi]$), with $\psi =0$ corresponding to the dorsal part of the visual field and positive extending leftward. $\theta$ is the polar angle ($\theta \in [0;\pi]$).
- Figure 3c: Perspective sketch of the same vision system.

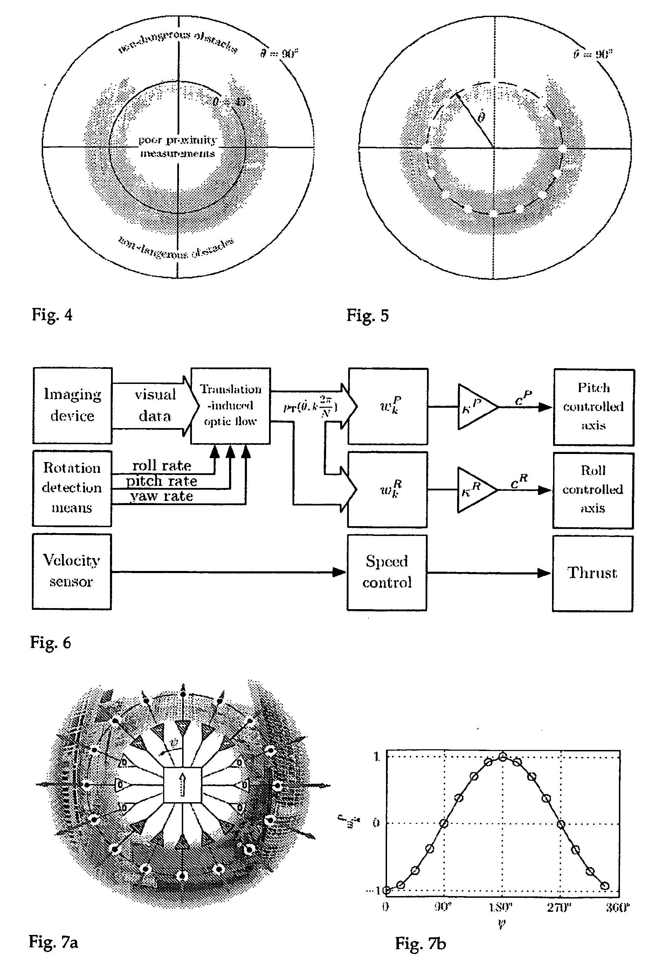

- Figure 4: Subjective representation of the region where proximity estimations are useful and possible for obstacle anticipation and avoidance. The original fisheye image is faded away where it is not useful.
- Figure 5: Sampling of the visual field. N sampling points are uniformly spaced on a circle of radius $\hat{\theta}$. On this illustration, N=16 and $\theta = 45°$
- Figure 6: Overview or the control architecture.

- Figure 7a: Qualitative distribution of weights $w_k^P$ for the generation of the pitching control signal. The arrow in the centre indicates the pitch direction for a positive signal.
- Figure 7b: Weight distribution according to equ. (4).

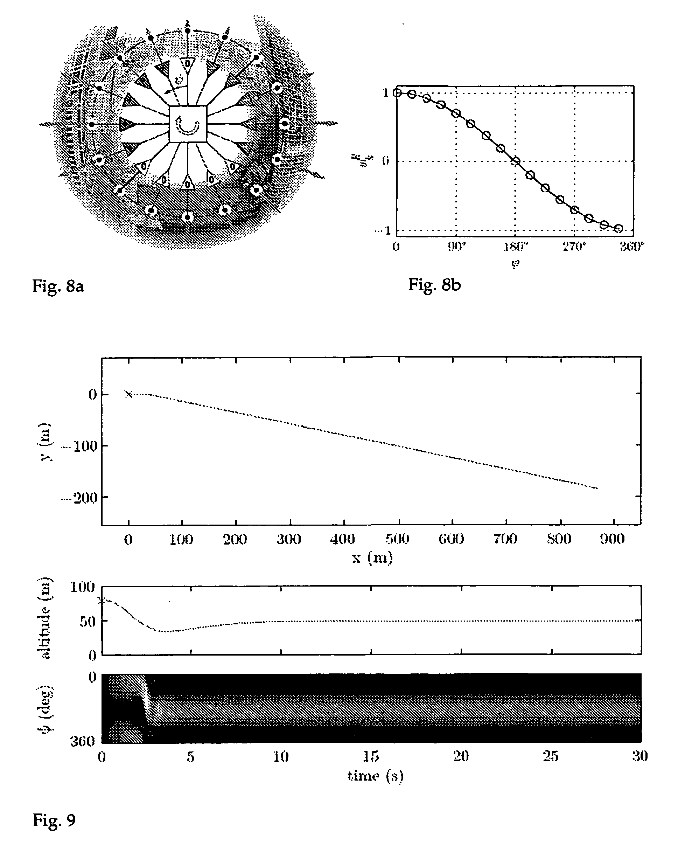

- Figure 8a: Qualitative distribution of weights $w_k^R$ for the generation of the rolling control signal. The arrow in the centre indicates the roll direction for a positive signal.
- Figure 8b: Weight distribution according to equ. (5).
- Figure 9: Trajectory of the simulated aircraft when released 80 m above a flat surface, oriented up-side down, with a nose-down pitch of 45° and zero speed..

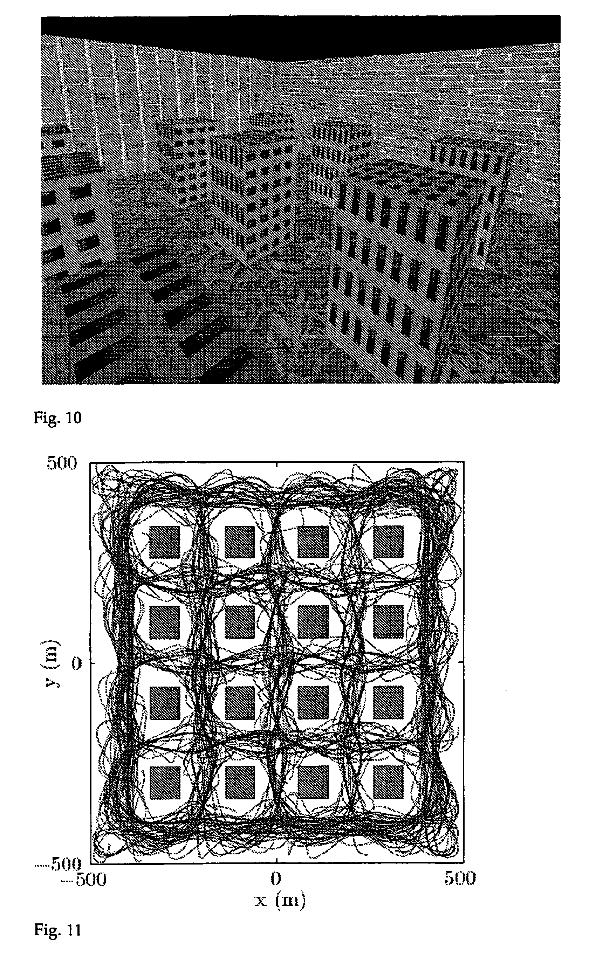

- Figure 10: Image of the simulated environment, comprising obstacles of size 80x80 m and height 150 m surrounded by large walls.
- Figure 11: Trajectories of the simulated aircraft in the test environment.

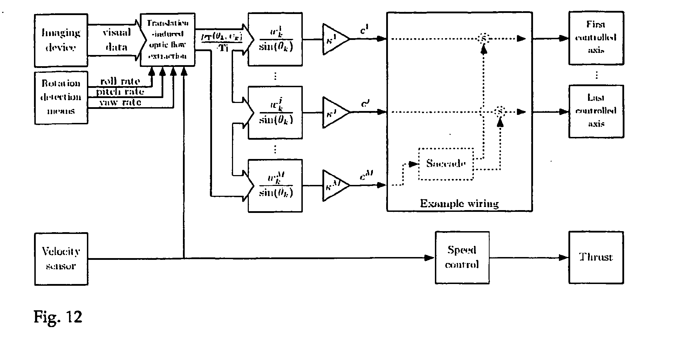

- Figure 12: Generic version of the control architecture proposed in this paper.

**2 Detailed description of the invention**

The proposed vision-based control strategy requires the steps illustrated in figure 2 to map the data provided by the embedded sensors (typically an imaging device - also called vision system - looking forward with a large field of view (e.g. figure 3a) and three orthogonal rate gyros as rate detection means) into signals that can be used to drive the aircraft's controlled axes. First, the optic flow must be extracted from the information provided by the embedded vision system.

**2.1 Proximity estimation using translation-induced optic flow**

The fundamental property of optic flow that enables proximity estimation is often called *motion parallax* (Whiteside and Samuel, 1970). Essentially, it states that the component of optic flow that is induced by translatory motion (called hereafter translational optic flow or translation-induced optic flow) is proportional to the magnitude of this motion and inversely proportional to the distance to obstacles in the environment. It is also proportional to the sine of the angle $\alpha$ between the translation direction and the looking direction. This can be written

$$p_{\mathbf{T}}(\theta, \psi) = \frac{|\mathbf{T}|}{D(\theta, \psi)} \sin(\alpha) \qquad (1)$$

where $p_{\mathbf{T}}(\theta, \psi)$ is the amplitude of translation-induced optic flow seen in direction $(\theta, \psi)$ (see figure 3 for the coordinate system convention), $\mathbf{T}$ is the translation vector, $D(\theta, \psi)$ is the distance to obstacle seen in direction $(\theta, \psi)$ and $\alpha$ is the angle between the translation vector $\mathbf{T}$ and the viewing direction $(\theta, \psi)$.

Consequently, in order to estimate proximity of obstacles, it is recommended to exclude the optic flow component due to rotations, a processed known as *derotation* and implemented by some processing means. In an aircraft, this can be achieved by predicting the optic flow generated by rotation signalled by rate gyros or inferred from optic flow field, and then subtracting this prediction from the total optic flow extracted from vision data. Alternatively, the vision system can be actively rotated to counter the aircraft's movements.

In the context of cruise flight, the translation vector is essentially aligned with the aircraft's main axis at all time. If the vision system is attached to its platform in such way that its optic axis is aligned with the translation direction, the angle $\alpha$ in equ. (1) is equal to the polar angle $\theta$ (also called eccentricity). Equ. (1) can then be rearranged to express the proximity to obstacle $\mu$ (i.e. inverse of distance, sometime also referred as nearness):

$$\mu(\theta, \psi) = \frac{1}{D(\theta, \psi)} \propto \frac{p_{\mathbf{T}}(\theta, \psi)}{\sin(\theta)} \qquad (2)$$

This means that the magnitude of translation-induced optic flow in a given viewing direction, as generated by some processing means, can be directly interpreted by some calculation means as a measure of proximity of obstacles in that direction, scaled with the sine of eccentricity $\theta$ in the viewing direction.

**2.2 Viewing directions and spatial integration**

The next question concerns the selection of the viewing directions in which the translation-induced optic flow should be measured, how many measurements should be taken, and how these measurements should be combined to generate control signals for the aircraft. In order to reduce the computational requirements, it is desirable to reduce the number of measurements as much as possible. It turns out that not all the viewing directions in the visual field have the same relevance for flight control. For $\theta > 90°$, these estimations correspond to obstacles that are behind the aircraft and do not require anticipation or avoidance. For $\theta$ values close to 0, the magnitude of optic flow measurements will decrease down to zero (i.e. in the centre of the visual field), because it is proportional to $\sin(\theta)$ (see equ. (1)). Since the vision system resolution will limit the capability to measure small amounts of optic flow, proximity estimation will not be accurate at small eccentricities $\theta$. These constraints define a domain in the visual field roughly spanning polar angles around $\theta = 45°$, illustrated in figure 4, where optic flow measurement are significant for controlling the course of an aircraft.

We propose to measure equ. (2) at $N$ points uniformly spread on a circle defined by a given polar angle $\hat{\theta}$. These $N$ points are defined by angles $(\theta_k ; \psi_k) = (\hat{\theta} ; k\frac{2\pi}{N}), k = 0, 1, ..... N - 1$. This sampling is illustrated in figure 5.

The control signals of the aircraft, such as roll and pitch, can be generated from a linear summation of the weighted measurements:

$$c^j = \frac{\kappa^j}{N \cdot \sin(\hat{\theta})} \cdot \sum_k p_T(\hat{\theta}, k\frac{2\pi}{N}) \cdot w_k^j \quad k = 0, 1, \ldots N\text{-}1 \qquad (3)$$

where $c^j$ is the $j^{th}$ control signal, $w_k^j$ the associated set of weights and $\kappa^j$ a gain to adjust the amplitude of the control signal. This summation process is similar to what is believed to happen in the tangential cells of flying insects (Krapp et al., 1998); namely, a wide-field integration of a relatively large number of motion estimations into a reduced number of control-relevant signals.

In a more generic way, this process can be seen as a two-stage transformation of proximities into control signals. First, the proximities are individually converted using a specific conversion function implemented by some conversion means (e.g. a multiplication by a weight). Second, the converted proximities are combined by some combination means (e.g. using a sum) into a control signal. Finally, the control signals are then used by some driving means to drive the controlled axes of the aircraft. While this simple weighted sum approach is sufficient to implemented functional autopilots, there may be the need to use more complex, possibly non-linear, conversion functions and combinations.

### 2.3 Roll and pitch controlled axes

The majority of aircraft are steered using mainly two control signals corresponding to roll and pitch rotations (note that additional control signals, e.g. for yaw axis, can be generated similarly). To use the approach described in the previous section, two sets of weights $w_k^R$ and $w_k^P$ must be devised, for the roll and, respectively, pitch control. Along with a speed controller to regulate cruising velocity, this system forms a complete autopilot as illustrated in figure 6. Data from the imaging device and rotation detection means is used to extract translation-induced optic flow. Optic flow measurements $p_T$ are then linearly combined using two sets of weights $w_k^R$ and $w_k^P$, , corresponding to pitch and roll controlled axes. In parallel, the thrust is controlled by a simple regulator to maintain cruising speed, based on measurements from a velocity sensor.

Let us first consider the pitch control signal $c^P$ (figure 7). Proximity signals in the ventral region (i.e. $\psi$ near 180°, see figure 3 for angle conventions) correspond to the presence of obstacles in the ventral part of the aircraft. Corresponding weights should thus be positive to generate a positive control signal which in turn will produce a pitch-up manoeuvre that leads to avoidance of the obstacle. Likewise, weights in the dorsal region corresponding to the area above the aircraft (i.e. $\psi$ near 0°) should be negative in order to generate pitch-down manoeuvres. Lateral proximity estimations (i.e. $\psi$ near $\pm$90°) should not influence the pitching behaviour, and thus corresponding weights should be set to zero. A possible way of determining these weights is given by (figure 7b):

$$w_k^P = -\cos(k \cdot \frac{2\pi}{N}) \qquad (4)$$

Using the same reasoning, the qualitative distribution needed for the weights related to the roll signal can be derived (figure 8). Weights corresponding to the left of the aircraft should be positive, in order to initiate a rightward turn in reaction to the detection of an obstacle on the left. Inversely, weights on the right should be negative. Since obstacles in the ventral region ($\psi$ = 180°) are avoided by pitch signal only, the weights in this region should be set to zero. At first sight, the same reasoning should apply for the dorsal region. However, doing so would be problematic when the aircraft is in an upside down position (i.e. with the ventral part facing sky). In such situations, it may be desirable to steer the aircraft back to an upright and level attitude. This can be achieved by extending the non-zero weights of the lateral regions up to the dorsal field-of-view, as illustrated in figure 8a. These weights, combined to the proximity of ground in the dorsal region, will generate a roll signal leading to the levelling of the aircraft. The following equation is one way to implement such a weight distribution (figure 8b):

$$w_k^R = \cos(k \cdot \frac{\pi}{N}) \qquad (5)$$

### 3 Proof of concept

In order to assess the performance of the complete autopilot described above (figure 6), we tested it in two simulated environments. The first one, a flat, obstacle-free environment is used to show the capacity of the autopilot to recover from extreme situations and regulate flight to a stable altitude and attitude. The second environment, mimicking an urban setting, is used to demonstrate the full obstacle avoiding performance.

### 3.1 Simulation setup

To test the control strategy, we used a simulation package called *Enlil* that relies on OpenGL for rendition of image data and the Open Dynamics Engine (ODE) for the simulation of the physics.

We use a custom-developed dynamics model based on the aerodynamic stability derivatives (Cooke et al., 1992) for a commercially available flying wing platform called *Swift* that we use as platform for aerial robotics research at our laboratory (Leven et al, 2007). The derivatives associate a coefficient for each aerodynamical contribution to each of the 6 forces and moments acting on the airplane and linearly sum them. The forces are then passed to ODE for the kinematics integration. So far, these coefficients have been tuned by hand to reproduce the behaviour of the real platform. While the resulting model may not be very accurate, it does exhibit dynamics that are relevant to this kind of aircraft and is thus sufficient to demonstrate the performance of our autopilot.

There are many optic flow extraction algorithms that have been developed and could be used (Horn and Schunck, 1981, Nagel, 1982, Barron et al., 1994). The one that we used is called *image interpolation algorithm* (I2A) (Srinivasan, 1994). In order to derotate the optic flow estimations, i.e. remove the rotation induced part to keep the translational component only as discussed in the above section, we simply subtracted the value of the rotational speed of the robot, as it would be provided by rate gyros on a real platform.

Table 1 summarises the parameters that were used in the simulation presented in this paper. The speed regulator was a simple proportional regulator with gain set to 0.1 and set-point to 25 m/s.

Table 1: Parameter values used in the simulations.

| Parameter | Value |
|:---:|:---:|
| $\theta, \vartheta$ | $45°$ |
| $N$ | 16 |
| $\kappa^E$ | 5 |
| $\kappa^A$ | 60 |
| $w_k^E$ | according to equ. (4) |
| $w_k^A$ | according to equ. (5) |

### 3.2 Flying over a flat ground

The initial test for our control strategy consisted of flying over an infinitely flat ground without obstacles. The result of a simulation of this situation is shown in figure 9. To test the capability of the controller to recover from extreme situations, the aircraft was started upside-down, with a $45°$ nose-down attitude and a null speed. Immediately, the aircraft recovered to a level attitude and reached its nominal speed. Although altitude was not explicitly regulated in our control architecture, the system quickly stabilised and maintained a constant altitude (of about 50 m above ground in this case). Such behaviour arises from the equilibrium between the gravity that pulls the aircraft toward the ground and the upward drive from the controller that detects the ground as an obstacle.

In the figure 9, it is illustrated the aircraft when released 80 m above a flat surface, initialised upside-down with $45°$ nose-down attitude and null speed. Within a few seconds, the aircraft recovers from this attitude and starts flying along a straight trajectory, as seen on the top graph. The middle graph shows that in the beginning, the aircraft quickly looses some altitude due to the fact that it starts a zero speed and nose-down attitude, and then recovers and maintains a constant altitude. The bottom graph shows the distribution of translational optic flow around the field of view (brighter points means higher translation-induced optic flow). The distribution quickly shifts from the dorsal to the ventral region as the aircraft recovers from the upside-down position. The controller then maintains the peak of the distribution in the ventral region for the rest of the trial.

### 3.3 Flying among buildings

To test the obstacle avoidance capability of the control strategy, we ran simulations in a 500×500-m test environment surrounded by large walls comprising obstacle of size 80x80 m and height 150 m (figure 10). Obstacles the size of buildings were placed at regular intervals within this arena (red squares in figure 11). The aircraft was started at random locations, below the height of the obstacles and between them, and with a null speed. It was then controlled using the autopilot for 20 seconds. The 2D projections of 512 trajectories are shown in figure 11. This result illustrates the capability of our control strategy to avoid the obstacles in this environment, independently of their relative position with respect to the aircraft. The rare cases (less than 10) in which the aircraft closely approached or crossed the obstacles do not correspond to collisions, as the aircraft sometimes fly above them.

### 4 Discussion

In this section we discuss various extensions of the control architecture presented above, which can be used to address specific needs of other platforms or environments.

### 4.1 Estimation of translational optic flow

While the control strategy we propose has a limited computing power requirement, the optic flow extraction algorithms can be computationally expensive. Moreover, a vision system with a relatively wide field-of-view - typically more than 100° - is recommended in order to acquire visual data that is relevant for control (see figure 4). Therefore, careful hardware design will be needed to limit consumption and weight. Initial development in our laboratory show that a vision system weighing about 10 g and electronics weighing 30 g and consuming roughly 2 W are sufficient to run our system, allowing for a platform with a total weight of less than 300 g to be developed.

To make even lighter systems, alternative approaches to optic flow extraction could be used by using different sorts of imaging device. First, custom-designed optic flow chips that compute optic flow at the level of the vision sensor (e.g. Moeckel and Liu, 2007) can be used to offload the electronics from optic flow extraction. This would allow the use of smaller microcontrollers to implement the rest of the control strategy. Also, the imaging device can be made of a set of the optical chips found in modem computer mice, each chip being dedicated to a single viewing direction. These chips are based on the detection of image displacement, which is essentially optic flow, and could potentially be used to further lighten the sensor suite by lifting the requirement for a wide-angle lens.

Finally, any realistic optic flow extraction is likely to contain some amount of noise. This noise can arise from several sources, including absence of contrast, aliasing (in the case of textures with high spatial frequencies) and the aperture problem (see e.g. Mallot, 2000). In addition, moving objects in the scene can also generate spurious optic flow that can be considered as noise. To average out the noise, a large number of viewing directions and corresponding translation-induced optic flow estimations may be required to obtain a stable simulation.

### 4.2 Saccade

In most situations, symmetrical behaviour is desirable. For this reason, most useful sets of weights (or more generally, conversion functions) will be symmetrical as well, as is the case for the proposed distributions in equ. (4) and equ. (5). However, when facing certain situations - like flying perpendicularly toward a flat surface - the generated control signals can remain at a very low value, even though the aircraft is approaching an obstacle. While this problem occurs rarely in practice, it may be necessary to cope with it explicitly. This situation will typically exhibit a massive, global increase of optic flow in all directions, and can be detected using an additional control signal $c^S$ with corresponding weights $w_k^S = 1$ for all $k$. An emergency saccade, i.e. an open-loop avoiding sequence that performs a quick turn, can be triggered when this signal reaches a threshold. During the saccade, the emergency signal $c^S$ can be monitored and the manoeuvre can be aborted as soon as $c^S$ decreases below the threshold.

### 4.3 Alternative sampling of the visual field

For the sake of simplicity, we previously suggested the use of a simple set of viewing directions, along a single circle at $\theta = \hat{\theta}$, to select the locations where proximity estimation are carried out. The results show that this approach is sufficient to obtain the desired behaviour. However, some types of platforms or environments may require denser set of viewing directions. This can also be useful to average out noise in optic flow estimation, as discussed above. There are some of the many approaches that can be used.

- One possibility is to use several circles at $\theta = \hat{\theta}_i$, $i = 1,....,M$. Doing so makes it possible to simply re-use the same set of weights for each circle, effectively increasing the visual coverage with a minor increase in control complexity.
- Some optic flow extraction algorithms typically provide estimations that are regularly spaced on a grid on the image. While such a sampling scheme is not as intuitive as the circular one we propose, it can still easily be used by selecting only the estimations that fall within the region of interest described in section 2.2. Using the same distributions as given in equ. (4), the weights corresponding to the pitch control become:

$$w_k^P = -\cos(\psi_k) \qquad (6)$$

where $\psi_k$ is the azimuth angle for the $k^{th}$ sampling point. The other sets of weights can be similarly adapted. The control signals are then computed as follows:

$$c^j = \frac{\kappa^j}{N} \sum_k \frac{p_{T,k}}{\sin(\theta_k)} \cdot w_k^j \qquad (7)$$

where $\theta_k$ is the polar angle for the $k^{th}$ sampling point.

- It may be desirable to behave differently for obstacles in the centre of the visual field than for obstacles that are more eccentric to the flight trajectory, for example because they are more likely to lie on the trajectory of the aircraft. For this reason, it can, in general, be useful to distribute weights in a way that is dependent of $\theta_k$ as well as $\psi_k$, i.e.:

$$w_k^j = f^j(\theta_k, \psi_k) \qquad (8)$$

where $(\theta_k; \psi_k)$ are the coordinates of the $k^{th}$ optic flow estimation.

### 4.4 Minimal set of viewing directions

For the sake of generality, we have considered so far N viewing directions, where N should be as large as the implementation permits. However, in case of very strong constraints, the minimal number of viewing directions for a fully autonomous, symmetrical aircraft is 3: left-, right- and downward. The left/right pair of viewing direction is used to drive the roll controlled axis, while the bottom viewing direction is used to drive the pitch controlled axis. For this minimalist implementation, the top viewing direction can be omitted based on the assumption that no obstacle are likely to be encountered above the aircraft, as it is the case in most environments.

### 4.5 Speed regulation

In our description, we silently assumed that forward speed is maintained constant at all times. While such a regulation can be relatively easily implemented on real platforms, it may sometimes be desirable to fly at different speeds depending on the task requirements. We discuss here the two approaches that can be used in this case.

The simplest option is to ignore speed variations and consider proximity estimation as a time-to-contact information (Lee, 1976, Ancona and Poggio, 1993). For a given distance to obstacle, a faster speed will yield a higher optic flow value than a reduced speed (equ. (1)). The aircraft will then avoid obstacles at a greater distance when it is flying faster which is a perfectly reasonable behaviour (Zufferey, 2005).

Alternatively, the forward speed can be measured by the velocity sensor and explicitly taken into consideration in the computation of the control signals by dividing them by the amplitude of translation $|\mathbf{T}|$. For example, equ. (3) becomes:

$$c^j = \frac{\kappa^j}{|\mathbf{T}| \cdot N \cdot \sin(\hat{\theta})} \cdot \sum_k p_T(\hat{\theta}, k\frac{2\pi}{N}) \cdot w_k^j \quad k = 0, 1, \dots N\text{-}1 \qquad (9)$$

**References**

N. Ancona and T. Poggio. Optical flow from 1D correlation: Application to a simple time-to-crash detector. In Proceedings of Fourth International Conference on Computer Vision, Berlin, pages 209-214, 1993.

D.B. Barber, S. Griffiths, T.W. McLain, and R.W. Beard. Autonomous landing of miniature aerial vehicles. In AIAA Infotech@Aerospace, 2005.

J.L. Barron, D.J. Fleet, and S:S. Beauchemin. Performance of optical flow techniques. International Journal of Computer Vision, 12 (1):43-77, 1994.

G.L. Barrows, C. Neely, and K.T. Miller. Optic flow sensors for MAV navigation. In Thomas J. Mueller, editor, Fixed and Flapping Wing Aerodynamics for Micro Air Vehicle Applications, volume 195 of Progress in Astronautics and Aeronautics, pages 557-574. AIAA, 2001.

J.S. Chahl, M.V. Srinivasan, and H. Zhang. Landing strategies in honeybees and applications to uninhabited airborne vehicles. The International Journal of Robotics Research, 23 (2):101-110, 2004.

J.M. Cooke, M.J. Zyda, D.R. Pratt, and R.B. McGhee. Npsnet: Flight simulation dynamic modeling using quaternions. Presence: Teleoperators and Virtual Environments, 1 (4):404-420, 1992.

M. N. O. Davies and P. R. Green. Perception and Motor Control in Birds. Springer-Verlag, 1994.

M. Egelhaaf and R. Kern. Vision in flying insects. Current Opinion in Neurobiology, 12(6): 699-706, 2002.

J.J. Gibson. The Perception of the Visual World. Houghton Mifflin, Boston, 1950.

W.E. Green, P.Y. Oh, K. Sevcik, and G.L. Barrows. Autonomous landing for indoor flying robots using optic flow. In ASME International Mechanical Engineering Congress and Exposition, Washington, D.C., volume 2, pages 1347-1352, 2003.

S. Griffiths, J. Saunders, A. Curtis, T. McLain, and R. Beard. Obstacle and Terrain Avoidance for Miniature Aerial Vehicles, volume 33 of Intelligent Systems, Control and Automation: Science and Engineering, chapter I.7, pages 213-244. Springer, 2007.

B.K. Horn and P. Schunck. Determining optical flow. Artificial Intelligence, 17:185-203, 1981.

J.J. Koenderink and A.J. van Doom. Facts on optic flow. Biological Cybernetics, 56:247-254, 1987.

H.G. Krapp, B. Hengstenberg, and R. Hengstenberg. Dendritic structure and receptive-field organization of optic flow processing intemeurons in the fly. Journal of Neurophysiology, 79:1902-1917, 1998.

D.N. Lee. A theory of visual control of braking based on information about time-to-collision. Perception, 5:437-459, 1976.

S. Leven, J.-C. Zufferey, D. Floreano. A low-cost, safe and easy-to-use flying platform for outdoor robotic research and education. In International Symposium on Flying Insects and Robots. Switzerland, 2007.

H.A. Mallot. Computational Vision: Information Processing in Perception and Visual Behavior. The MIT Press, 2000.

R. Moeckel and S.-C. Liu. Motion Detection Circuits for a Time-To-Travel Algorithm. In IEEE International Symposium on Circuits and Systems, pp. 3079-3082. 2007.

L. Muratet, S. Doncieux, Y. Briere, and J.A. Meyer. A contribution to vision-based autonomous helicopter flight in urban environments. Robotics and Autonomous Systems, 50(4): 195-209, 2005.

H.H. Nagel. On change detection and displacement vector estimation in image sequences. Pattern Recognition Letters, 1:55-59, 1982.

T.R. Neumann and H.H. Bülthoff. Behavior-oriented vision for biomimetic flight control. In Proceedings of the EPSRC/ BBSRC International Workshop on Biologically Inspired Robotics, pages 196-203, 2002.

F. Ruffier and N. Franceschini. Optic flow regulation: the key to aircraft automatic guidance. Robotics and Autonomous Systems, 50(4): 177-194, 2005.

S. Scherer, S. Singh, L. Chamberlain, and S. Saripalli. Flying fast and low among obstacles. In Proceedings of the 2007 IEEE Conference on Robotics and Automation, pages 2023-2029, 2007.

M.V. Srinivasan. An image-interpolation technique for the computation of optic flow and egomotion. Biological Cybernetics, 71:401-416, 1994.

J.H. van Hateren and C. Schilstra. Blowfly flight and optic flow. II. head movements during flight. Journal of Experimental Biology, 202:1491-1500, 1999.

T.C. Whiteside and G.D. Samuel. Blur zone. Nature, 225:94-95, 1970.

J.-C. Zufferey. Bio-inspired vision-based flying robots. Ph.D. thesis, EPFL, 2005.

J.-C. Zufferey, A. Klaptocz, A. Beyeler, J.-D. Nicoud, and D. Floreano. A 10-gram vision-based flying robot. Advanced Robotics, Journal of the Robotics Society of Japan, 21(14):1671-1684, 2007.

**Claims**

1. A method for avoiding collision with obstacles by an aircraft having a longitudinal axis defined by its flying direction comprising the steps of:

    a) defining at least three viewing directions spread within frontal visual field of view
    b) acquiring rotation rates of the aircraft by rotation detection means,
    c) acquiring visual data in at least said viewing directions by at least one imaging device,
    d) determining translation-induced optic flow in said viewing directions based on the rotation rates and the visual data,
    e) for each viewing direction, estimating the proximity of obstacles of said viewing direction based on at least the translation-induced optic flow related to said viewing direction,
    f) for each controlled **axis** (pitch, roll and/or yaw), defining for each proximity, a conversion function to produce a converted proximity related to said controlled axis,
    g) determining a control signal for each controlled **axis** by linearly combining the converted proximities using a set of weights per axis,
    h) using said control signals to drive the controlled axes of the aircraft.

2. Method of claim 1, it further comprises the step of:

    - acquiring an image by the imaging device encompassing the viewing directions and extracting the visual data related to each viewing direction.

3. Method of claim 1, in which the imaging device is made of a set of optic flow sensors, each dedicated to each viewing direction.

4. Method of any of the claims 1 to 3, wherein the rotation detection means is made of gyroscopic means and/or inertial sensors.

5. Method of any of claims 1 to 3, wherein the rotation detection means is using the imaging device, the rotation data being determined by processing optic flow extracted from the visual data.

6. Method of any of claims 1 to 5, wherein the viewing directions are spread at a given eccentricity with respect to the longitudinal axis of the aircraft, and each conversion function is a multiplication by a specific gain.

7. Method of any of claims 1 to 5, wherein the viewing directions are spread at various eccentricities with respect to the longitudinal axis of the aircraft, and each conversion function is a multiplication by a specific gain and a division by the sine of the eccentricity of the corresponding viewing direction.

8. Method of any of claims 1 to 7, wherein the combination of the converted proximities is an averaging function.

9. A device for avoiding collision with obstacles by an aircraft having a longitudinal axis defined by its flying direction comprising:

a) means for defining at least three viewing directions spread within frontal visual field of view,
b) detection means for acquiring rotation rates of the aircraft,
c) at least one imaging device for acquiring visual data in at said viewing directions,
d) processing means for determining translation-induced optic flow in said viewing directions based on the rotation rates and the acquired visual data,
e) calculation means to estimate for each viewing direction the proximity of obstacles of said viewing direction based on at least the translation-induced optic flow related to said viewing direction,
f) means to define for each proximity, for each controlled **axis** (pitch, roll and/or yaw), a conversion function to produce a converted proximity related to said controlled axis,
g) means for determining a control signal for each controlled **axis** by linearly combining the converted proximities using a set of weights per axis,
h) driving means for using said control signals to drive the controlled axes of the aircraft.

10. Device of claim 9, in which the imaging device is made of a set of optic flow sensors, each dedicated to each viewing direction.

11. Device of claims 9 or 10, wherein the rotation detection means are made of rate gyro and/or inertial sensors.

**Patentansprüche**

1. Verfahren zur Vermeidung des Zusammenstoßes eines Flugzeugs mit Hindernissen, wobei die Längsachse des Flugzeugs durch seine Flugrichtung definiert ist, mit folgenden Phasen:

a) Festlegung von mindestens drei Blickrichtungen innerhalb des frontalen Gesichtsfelds
b) Feststellung von Rotationsraten des Flugzeugs durch Rotationserkennungsmittel,
c) Sammlung visueller Daten in mindestens besagten Blickrichtungen durch mindestens ein Bildgerät,
d) Feststellung des durch Translation induzierten optischen Stroms in besagten Blickrichtungen auf der Grundlage der Rotationsraten und der visuellen Daten,
e) für jede Blickrichtung Schätzung der Nähe von Hindernissen dieser Blickrichtung auf der Grundlage von mindestens dem durch Translation induzierten optischen Strom, bezogen auf besagte Blickrichtung,
f) für jede kontrollierte Achse (Nickachse, Roll- und/oder Gierachse) für jede Nähe Festlegung einer Umwandlungsfunktion, um eine umgewandelte Nähe herzustellen, die auf besagte kontrollierte Achse bezogen ist,
g) Festlegung eines Kontrollsignals für jede kontrollierte Achse durch lineare Kombinierung der umgewandelten Nähen unter Verwendung eines Satzes von Gewichten pro Achse,
h) Verwendung der Kontrollsignale, um die kontrollierten Achsen des Flugzeugs anzutreiben.

2. Verfahren nach Anspruch 1, das des weiteren folgende Phase umfasst:

- Aufnahme eines Bildes durch das Bildgerät, das die Blickrichtungen umfasst, und Entnahme der visuellen Daten, die auf jede Blickrichtung bezogen sind.

3. Verfahren nach Anspruch 1, wobei das Bildgerät aus einem Satz von optischen Stromsensoren besteht, jeder für jede Blickrichtung.

4. Verfahren nach einem beliebigen der Ansprüche 1 bis 3, wobei das Rotationserkennungsmittel aus gyroskopischen Mitteln und/oder Trägheitssensoren besteht.

5. Verfahren nach einem beliebigen der Ansprüche 1 bis 3, wobei das Rotationserkennungsmittel das Bildgerät benutzt und wobei die Rotationsdaten durch die Verarbeitung von optischem Strom bestimmt werden, der aus den visuellen Daten entnommen wurde.

6. Verfahren nach einem beliebigen der Ansprüche 1 bis 5, wobei die Blickrichtungen nach einer gegebenen Exzentrizität in bezug auf die Längsachse des Flugzeugs verteilt sind und jede Umwandlungsfunktion eine Multiplikation mit einer spezifischen Verstärkung ist.

7. Verfahren nach einem beliebigen der Ansprüche 1 bis 5, wobei die Blickrichtungen nach verschiedenen Exzentrizitäten in bezug auf die Längsachse des Flugzeugs verteilt sind und jede Umwandlungsfunktion eine Multiplikation mit einer spezifischen Verstärkung und eine Division durch den Sinus der Exzentrizität der entsprechenden Blickrichtung ist.

8. Verfahren nach einem beliebigen der Ansprüche 1 bis 7, wobei die Kombination der umgewandelten Annäherungen eine Mittelungsfunktion ist.

9. Eine Vorrichtung zur Vermeidung des Zusammenstoßes eines Flugzeugs mit einer Längsachse, die durch seine Flugrichtung definiert ist, mit Hindernissen, mit:

   a) Mitteln zur Festlegung von mindestens drei Blickrichtungen, die innerhalb des frontalen Gesichtsfelds verteilt sind,
   b) Erkennungsmitteln zum Sammeln von Rotationsraten des Flugzeugs,
   c) mindestens einem Bildgerät zum Sammeln von visuellen Daten in besagten Blickrichtungen,
   d) Verarbeitungsmitteln zum Feststellen von durch Translation induziertem optischem Strom in besagten Blickrichtungen auf der Grundlage der Rotationsraten und den erworbenen visuellen Daten,
   e) Berechnungsmitteln zur Schätzung, für jede Blickrichtung, der Nähe von Hindernissen zu der Blickrichtung auf der Grundlage von mindestens dem durch Translation induzierten optischen Strom, bezogen auf besagte Blickrichtung,
   f) Mitteln, um für jede Nähe, für jede kontrollierte Achse (Nickachse, Roll- und/oder Gierachse), eine Umwandlungsfunktion zu definieren, um eine umgewandelte Nähe zu bilden, die auf besagte kontrollierte Achse bezogen ist,
   g) Mitteln zur Festlegung eines Kontrollsignals für jede kontrollierte Achse durch lineare Kombinierung der umgewandelten Annäherungen unter Verwendung eines Satzes von Gewichten pro Achse,
   h) Antriebsmitteln zur Verwendung besagter Kontrollsignale, um die kontrollierten Achsen des Flugzeugs anzutreiben.

10. Vorrichtung nach Anspruch 9, wobei das Bildgerät aus einem Satz von optischen Stromsensoren besteht, jeder für jede Blickrichtung.

11. Vorrichtung nach den Ansprüchen 9 oder 10, wobei die Rotationserkennungsmittel aus Wendekreiseln und/oder Trägheitssensoren bestehen.

**Revendications**

1. Méthode pour éviter la collision d'un avion avec des obstacles, l'avion ayant un axe longitudinal défini par sa direction de vol, la méthode comprenant les phases de :

   a) définir au moins trois directions de vue réparties dans le champ visuel frontal
   b) acquérir les vitesses de rotation de l'avion par des moyens de détection de rotation,
   c) obtenir des données visuelles dans au moins lesdites directions de vue par au moins un dispositif d'acquisition d'images,
   d) déterminer le courant optique induit par translation dans lesdites directions de vue, sur la base des fréquences de rotation et des données visuelles,
   e) pour chaque direction de vue, estimer la proximité d'obstacles de ladite direction de vue sur la base d'au moins du courant optique induit par translation en connexion avec ladite direction de vue,

f) pour chaque axe contrôlé (axe de tangage, axe de roulis et/ou axe de lacet), définir pour chaque proximité, une fonction de conversion pour produire une proximité convertie en connexion avec ledit axe contrôlé,

g) déterminer un signal de contrôle pour chaque axe contrôlé en combinant de façon linéaire les proximités converties en utilisant un ensemble de poids par axe,

h) utiliser lesdits signaux de contrôle pour entraîner les axes contrôlés de l'avion.

2. Méthode selon la revendication 1, qui comprend en plus l'étape de :

- obtenir une image par le dispositif de traitement de l'image incluant les directions de vue, et extraire les données visuelles en rapport à chaque direction de vue.

3. Méthode selon la revendication 1, où le dispositif de traitement de l'image consiste en un ensemble de détecteurs de courant optique, chacun pour chaque direction de vue.

4. Méthode selon l'une quelconque des revendications 1 à 3, où le moyen de détection de la rotation consiste en des moyens gyroscopiques et/ou des détecteurs inertiels.

5. Méthode selon l'une quelconque des revendications 1 à 3, où le moyen de détection de la rotation utilise le dispositif de traitement de l'image, les données de rotation étant déterminées en traitant du courant optique extrait des données visuelles.

6. Méthode selon l'une quelconque des revendications 1 à 5, où les directions de vue sont diffusées avec une excentricité donnée par rapport à l'axe longitudinal de l'avion, et où chaque fonction de conversion est une multiplication par un gain spécifique.

7. Méthode selon l'une quelconque des revendications 1 à 5, où les directions de vue sont diffusées à plusieurs excentricités par rapport à l'axe longitudinal de l'avion, et où chaque fonction de conversion est une multiplication par un gain spécifique et une division par le sinus de l'excentricité de la direction de vue correspondante.

8. Méthode selon l'une quelconque des revendications 1 à 7, où la combinaison des proximités converties est une fonction de moyenne.

9. Dispositif pour éviter la collision avec des obstacles d'un avion ayant un axe longitudinal défini par sa direction de vol comprenant :

a) des moyens pour définir au moins trois directions de vue, réparties dans le champ visuel frontal,

b) des moyens de détection pour obtenir le taux de rotation de l'avion,

c) au moins un dispositif de traitement de l'image pour obtenir des données visuelles dans lesdites directions de vue,

d) des moyens de traitement pour déterminer le courant optique induit par translation dans lesdites directions de vue sur la base des taux de rotation et des données visuelles obtenues,

e) des moyens de calcul pour estimer pour chaque direction de vue la proximité d'obstacles de ladite direction de vue sur la base d'au moins le courant optique induit par translation en rapport avec ladite direction de vue,

f) des moyens pour définir pour chaque proximité, pour chaque axe contrôlé (axe de tangage, axe de roulis et/ou axe de lacet), une fonction de conversion pour produire une proximité convertie en rapport audit axe contrôlé,

g) des moyens pour déterminer un signal de contrôle pour chaque axe contrôlé en combinant de façon linéaire les proximités converties en utilisant un ensemble de poids par axe,

h) des moyens de commande pour utiliser lesdits signaux de contrôle pour entraîner les axes contrôlés de l'avion.

10. Dispositif selon la revendication 9, où le dispositif de traitement de l'image consiste en un ensemble de détecteurs de courant optique, chacun consacré à chaque direction de vue.

11. Dispositif selon les revendications 9 ou 10, où les moyens de détection de la rotation sont des gyromètres et/ou des détecteurs inertiels.

Fig. 1

Fig. 2

Fig. 3a  Fig. 3b  Fig. 3c

Fig. 4

Fig. 5

Fig. 6

Fig. 7a

Fig. 7b

Fig. 8a

Fig. 8b

Fig. 9

Fig. 10

Fig. 11

Fig. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Green W. et al.** Optic-Flow-Based Collision Avoidance. *IEEE Robotics & Automation magazine, IEEE Service center,* March 2008, vol. 14 (1
- **N. Ancona ; T. Poggio.** Optical flow from 1D correlation: Application to a simple time-to-crash detector. *Proceedings of Fourth International Conference on Computer Vision, Berlin,* 1993, 209-214
- **D.B. Barber ; S. Griffiths ; T.W. McLain ; R.W. Beard.** Autonomous landing of miniature aerial vehicles. *AIAA Infotech@Aerospace,* 2005
- **J.L. Barron ; D.J. Fleet ; S:S. Beauchemin.** Performance of optical flow techniques. *International Journal of Computer Vision,* 1994, vol. 12 (1), 43-77
- Optic flow sensors for MAV navigation. **G.L. Barrows ; C. Neely ; K.T. Miller.** Fixed and Flapping Wing Aerodynamics for Micro Air Vehicle Applications, volume 195 of Progress in Astronautics and Aeronautics. AIAA, 2001, vol. 195, 557-574
- **J.S. Chahl ; M.V. Srinivasan ; H. Zhang.** Landing strategies in honeybees and applications to uninhabited airborne vehicles. *The International Journal of Robotics Research,* 2004, vol. 23 (2), 101-110
- **J.M. Cooke ; M.J. Zyda ; D.R. Pratt ; R.B. McGhee.** Npsnet: Flight simulation dynamic modeling using quaternions. *Presence: Teleoperators and Virtual Environments,* 1992, vol. 1 (4), 404-420
- **M. N. O. Davies ; P. R. Green.** Perception and Motor Control in Birds. Springer-Verlag, 1994
- **M. Egelhaaf ; R. Kern.** Vision in flying insects. *Current Opinion in Neurobiology,* 2002, vol. 12 (6), 699-706
- **J.J. Gibson.** *The Perception of the Visual World.* Houghton Mifflin, 1950
- **W.E. Green ; P.Y. Oh ; K. Sevcik ; G.L. Barrows.** Autonomous landing for indoor flying robots using optic flow. *ASME International Mechanical Engineering Congress and Exposition, Washington, D.C.,* 2003, vol. 2, 1347-1352
- **S. Griffiths ; J. Saunders ; A. Curtis ; T. McLain ; R. Beard.** Obstacle and Terrain Avoidance for Miniature Aerial Vehicles, volume 33 of Intelligent Systems, Control and Automation: Science and Engineering. Springer, 2007, 213-244
- **B.K. Horn ; P. Schunck.** Determining optical flow. *Artificial Intelligence,* 1981, vol. 17, 185-203
- **J.J. Koenderink ; A.J. van Doom.** Facts on optic flow. *Biological Cybernetics,* 1981, vol. 56, 247-254

- **H.G. Krapp ; B. Hengstenberg ; R. Hengstenberg.** Dendritic structure and receptive-field organization of optic flow processing intemeurons in the fly. *Journal of Neurophysiology,* 1998, vol. 79, 1902-1917
- **D.N. Lee.** A theory of visual control of braking based on information about time-to-collision. *Perception,* 1976, vol. 5, 437-459
- **S. Leven ; J.-C. Zufferey ; D. Floreano.** A low-cost, safe and easy-to-use flying platform for outdoor robotic research and education. *International Symposium on Flying Insects and Robots,* 2007
- **H.A. Mallot.** Computational Vision: Information Processing in Perception and Visual Behavior. The MIT Press, 2000
- **R. Moeckel ; S.-C. Liu.** Motion Detection Circuits for a Time-To-Travel Algorithm. *IEEE International Symposium on Circuits and Systems,* 2007, 3079-3082
- **L. Muratet ; S. Doncieux ; Y. Briere ; J.A. Meyer.** A contribution to vision-based autonomous helicopter flight in urban environments. *Robotics and Autonomous Systems,* 2005, vol. 50 (4), 195-209
- **H.H. Nagel.** On change detection and displacement vector estimation in image sequences. *Pattern Recognition Letters,* 1982, vol. 1, 55-59
- **T.R. Neumann ; H.H. Bülthoff.** Behavior-oriented vision for biomimetic flight control. *Proceedings of the EPSRC/BBSRC International Workshop on Biologically Inspired Robotics,* 2002, 196-203
- **F. Ruffier ; N. Franceschini.** Optic flow regulation: the key to aircraft automatic guidance. *Robotics and Autonomous Systems,* 2005, vol. 50 (4), 177-194
- **S. Scherer ; S. Singh ; L. Chamberlain ; S. Saripalli.** Flying fast and low among obstacles. *Proceedings of the 2007 IEEE Conference on Robotics and Automation,* 2007, 2023-2029
- **M.V. Srinivasan.** An image-interpolation technique for the computation of optic flow and egomotion. *Biological Cybernetics,* 1994, vol. 71, 401-416
- **J.H. van Hateren ; C. Schilstra.** Blowfly flight and optic flow. II. head movements during flight. *Journal of Experimental Biology,* 1999, vol. 202, 1491-1500
- **T.C. Whiteside ; G.D. Samuel.** Blur zone. *Nature,* 1970, vol. 225, 94-95
- **J.-C. Zufferey.** Bio-inspired vision-based flying robots. *Ph.D. thesis, EPFL,* 2005

- **J.-C. Zufferey ; A. Klaptocz ; A. Beyeler ; J.-D. Nicoud ; D. Floreano.** A 10-gram vision-based flying robot. *Advanced Robotics, Journal of the Robotics Society of Japan,* 2007, vol. 21 (14), 1671-1684

- **J.-C. Zufferey ; A. Klaptocz ; A. Beyeler ; J.-D. Nicoud ; D. Floreano.** A 10-gram vision-based flying robot. *Advanced Robotics, Journal of the Robotics Society of Japan,* 2007, vol. 21 (14), 1671-1684